# EUROPEAN PATENT APPLICATION

(11) **EP 4 524 267 A1**
(43) Date of publication of application: **19.03.2025**
(21) Application number: 23803454.0
(22) Date of filing: 26.04.2023
(51) Int. Cl.: C21D 9/32, B21H 3/04, B23P 15/14, B23P 23/04, C21D 1/10, C21D 9/00

(54) **MECHANICAL STRUCTURAL MEMBER AND PRODUCTION METHOD FOR SAME**

(30) Priority: 09.05.2022 JP 2022077203
(71) Applicant: NSK Steering & Control, Inc., Tokyo, 141-0032 (JP)
(72) Inventor: SAITO, Takeshi, Maebashi-shi, Gunma 371-8528 (JP)
(74) Representative: Mewburn Ellis LLP
(86) International application number: PCT/JP2023/016552
(87) International publication number: WO 2023/218975

(57) **Abstract**

Provided is a mechanical structural member that can reduce deformation and has high precision and excellent quality. The mechanical structural member has a groove (32) and a tooth (33) formed by plastic working, and includes a hardened layer (31a) with a uniform martensitic single phase structure formed on a surface by induction hardening, a core region (31b) having a sorbite structure, and a boundary layer (31c) in which a sorbite structure and a martensite structure are mixed, formed between the core region (31b) and the hardened layer (31a). Rockwell hardness in the core region is 13 to 28 (HRC), and a variation in the Rockwell hardness is within 6 (HRC).

## Description

### TECHNICAL FIELD

The present invention relates to a mechanical structural member that requires a high degree of precision and a method for manufacturing the same.

### BACKGROUND ART

Generally, when manufacturing products by processing steel materials, the steel materials are subjected to refining by heat treatment (quenching/tempering) to improve machinability, grindability, toughness, wear resistance, and the like. Heat treatment such as annealing is performed as necessary to improve machinability and workability.

The reason is that, as is already well known, it is difficult to make hardness and structure uniform even by performing quenching and tempering (refining) under general heat treatment conditions when processing a round bar material with a relatively uniform shape,

In recent years, in response to a demand for higher performance in precision machinery, studies are being conducted to improve accuracy and performance in a field of steel products such as ball threaded shafts, threaded shafts, and gears. In particular, a method of processing thread grooves by rolling has excellent productivity and can reduce manufacturing costs, so there is an increasing demand for a manufacturing method that can obtain a threaded shaft with excellent dimensional accuracy by rolling.

For example, Patent Literature 1 proposes a method for manufacturing a ball threaded shaft in which a thread groove is formed by rolling. The manufacturing method described in Patent Literature 1 described above is a method of refining a round bar material to have a hardness of HRC25 to HRC35, annealing an outer circumferential surface thereof to have a hardness of HRC23 or less, forming a thread groove by rolling, and hardening a surface of the groove by induction hardening. It is described that it becomes possible to manufacture a ball threaded shaft with less bending after heat treatment, less thread groove lead error, and less pitch error, without deteriorating workability.

Patent Literature 2 discloses a method for manufacturing a threaded shaft, in which thread grooves are rolled on an outer circumferential surface of a normalized steel material, and the surface is further subjected to nitriding treatment or sulfur-nitriding treatment. The above-described Patent Literature 2 describes that the precision quality and durability of ball screws and sliding screws can be improved because a surface hardened layer can be formed on a surface of a threaded shaft without quenching treatment that involves high-temperature heating, rapid cooling, and transformation.

### CITATION LIST

### PATENT LITERATURE

Patent Literature 1: JP2003-119518A
Patent Literature 2: JP2013-92212A

### SUMMARY OF INVENTION

### TECHNICAL PROBLEM

However, in recent years, there has been a demand for further improvement in dimensional accuracy, and even if the manufacturing method described in Patent Literature 1 or 2 is used, it may not be possible to obtain desired processing accuracy.

When the annealing processing described in Patent Literature 1, the nitriding processing or the sulfur-nitriding processing described in Patent Literature 2, or the like is performed, manufacturing processing becomes complicated, and the number of processes and processing time increase. As a result, productivity decreases.

The present invention has been made in view of the above-described problems, and an object of the present invention is to provide a mechanical structural member having high precision and excellent quality.

An object of the present invention is to provide a method for manufacturing a mechanical structural member that has excellent productivity, reduces tool wear during manufacturing, and can manufacture a mechanical structural member that has high precision and excellent quality.

### SOLUTION TO PROBLEM

The above-described object of the present invention is achieved by the following configuration [1] or [2].
[1] A mechanical structural member, where
   in the mechanical structural member where a groove and a tooth are formed by plastic working,
   a hardened layer having a martensite structure formed on a surface by induction hardening,
   a core region having a sorbite structure, and
   a boundary layer in which a sorbite structure and a martensite structure are mixed, formed between the core region and the hardened layer, are provided, and
   Rockwell hardness in the core region is 13 to 28 (HRC), and a variation in the Rockwell hardness is within 6 (HRC).
[2] A manufacturing method for manufacturing a mechanical structural member according to [1], the manufacturing method including:
   a refining step of refining a steel material to obtain a refined material that has a sorbite structure, has a Rockwell hardness of 13 to 28 (HRC) in a material portion excluding a predetermined thickness from a surface, and has a variation in Rockwell hardness within 6 (HRC) in the material portion;
   a plastic working step of performing plastic working on a surface of the refined material where the groove and tooth are formed to obtain a processed material; and
   an induction hardening step of performing induction hardening on the processed material.

### ADVANTAGEOUS EFFECTS OF INVENTION

According to the present invention, a mechanical structural member having high precision and excellent quality can be provided.

According to the present invention, it is possible to provide a method for manufacturing a mechanical structural member, which can reduce tool wear during manufacturing and manufacture a mechanical structural member with high precision and excellent quality.

### BRIEF DESCRIPTION OF DRAWINGS

Figs. 1A to 1C are schematic diagrams illustrating changes in a steel material when a ball screw shaft is manufactured by the manufacturing method suggested in Patent Literature 1.
Figs. 2A to 2C are schematic diagrams illustrating changes in a steel material when a ball screw shaft is manufactured under heat treatment conditions suggested in Patent Literature 1.
Fig. 3 is a graph diagram illustrating a relationship between hardness and position of S45C material after tempering.
Fig. 4 is a graph diagram illustrating a relationship between hardness and position of a refined material in a present embodiment, where a vertical axis shows the hardness and a horizontal axis shows the position of a surface layer in a cross section perpendicular to a longitudinal direction of the refined material.
Fig. 5A is a schematic cross-sectional view illustrating a test material for explaining a hardness measurement position in the present embodiment, and Fig. 5B is a side view thereof.
Fig. 6A is a cross-sectional view illustrating a ball screw shaft for explaining the hardness measurement position, and Fig. 6B is a side view thereof.
Fig. 7 is a schematic diagram illustrating quenching and tempering conditions of an invention example.
Fig. 8 is a schematic diagram illustrating quenching and tempering conditions of a comparative example.
Fig. 9 is a photograph substituted for a drawing illustrating a microscopic photograph of a metal structure of a cross section parallel to an axis of a ball screw shaft No. 1 after induction hardening.
Fig. 10 is a photograph substituted for a drawing illustrating a microscopic photograph of the metal structure of a cross section perpendicular to the axis of the ball screw shaft No. 1 after induction hardening.

### DESCRIPTION OF EMBODIMENTS

The inventors of the present invention conducted various studies on a mechanical structural member and a manufacturing method thereof that can improve processing accuracy while considering manufacturing methods of the related art.

According to Patent Literature 1, when a tempered portion is left and a surface is subjected to annealing (softening) heat treatment, thread accuracy can be improved even when rolling and induction hardening are performed. That is, Patent Literature 1 suggests performing (A-1) quenching, (A-2) tempering (refining), (B) annealing, and (C) induction hardening.

Here, a state of a structure when a ball threaded shaft is manufactured based on a composition of S55C steel material described in JIS G4051:2016 (carbon steel materials for mechanical structures) using the manufacturing method suggested in Patent Literature 1 will be described below. The main composition of S55C steel material is C: 0.52 to 0.58 (mass%), and when considering contents of Si, Mn, P, and S as equivalent to contents described in JIS G4051, the heat treatment conditions for the steel material are, for example, as follows.
(A-1) Quenching; 800°C to 850°C Water cooling Hardness (Rockwell C scale hardness) HRC 60 or more
(A-2) Tempering; 550°C to 650°C Rapid cooling Hardness HRC around 30
(B) Annealing; 790°C Furnace cooling Hardness HRC 0 to HRC 8.5

HRC 0 to HRC 8.5, which is a hardness due to (B) annealing, is a value converted from Brinell hardness of 149 HB to 192 HB.

Here, the changes in the steel material due to the steps (A-1), (A-2), and (B) will be described in more detail with reference to the drawings.

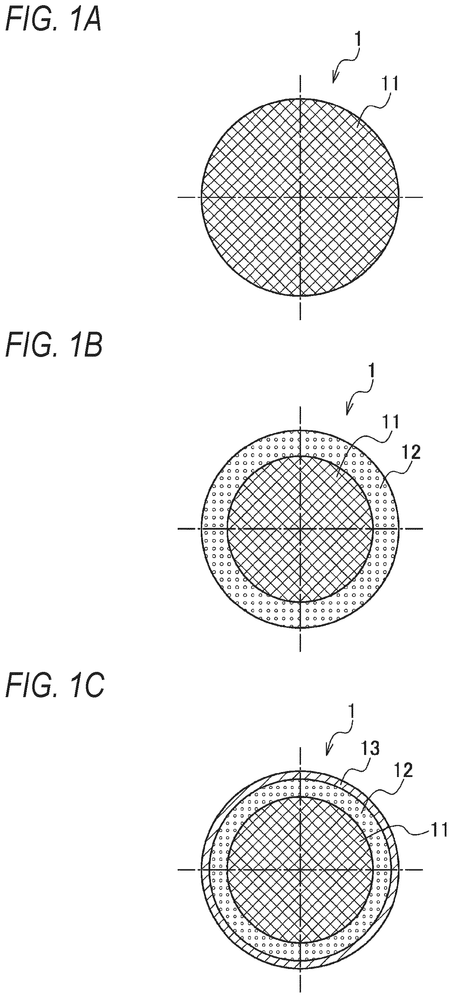

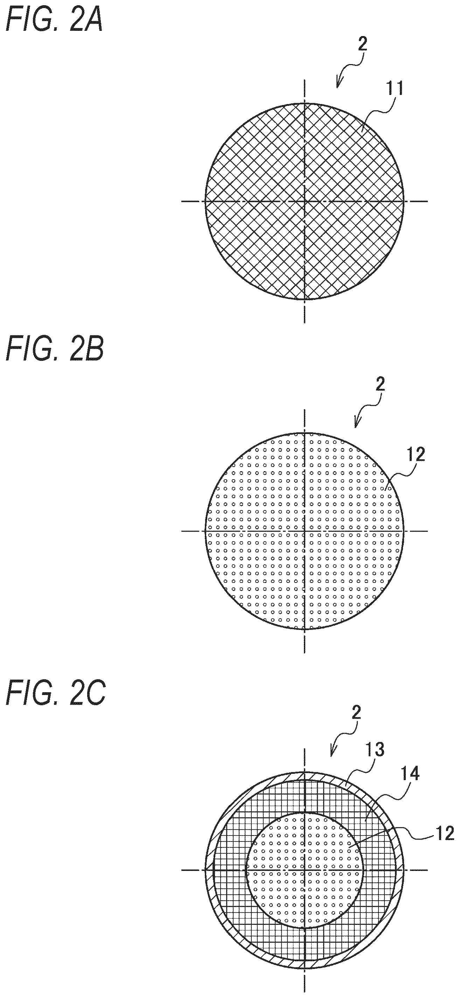

Figs. 1A to 1C are schematic diagrams illustrating changes in a steel material when a ball threaded shaft is manufactured by the manufacturing method suggested in Patent Literature 1. Figs. 2A to 2C are schematic diagrams illustrating changes in a steel material when a ball threaded shaft is manufactured under the heat treatment conditions suggested in Patent Literature 1.

(A-1) In quenching, a round bar material is heated to A3 transformation point + 30°C to 50°C to turn the round bar material into y iron (gamma iron: austenite face-centered cubic crystal), and then rapid cooling (quenching) is performed, to make martensite (body-centered cubic crystal (tetragonal)), which is an extremely hard and brittle structure.

(A-2) In tempering, the extremely hard and brittle structure that has become martensite is heated to a tempering temperature and then cooled, resulting in a slight decrease in hardness and obtainment of toughness.

As illustrated in Fig. 1A, a round bar material 1 is refined by (A-1) and (A-2) described above, and a tempered portion 11 is formed in which the hardness of an entire material is set in a range of HRC 25 to HRC 35.

(B) In annealing (annealing), the refined steel material is sufficiently maintained as an austenitic structure (790°C) and then slowly cooled in a furnace. As a result, as illustrated in Fig. 1B, a softened layer 12 having a hardness of HRC 23 or less is formed on a surface.

After performing peeling processing, centerless grinding, and rolling processing, the surface is induction hardened to form a hardened layer 13 quenched to a range of HRC 55 to HRC 62, as illustrated in Fig. 1C.

Generally, a purpose of annealing is to remove internal residual stress caused by processing, soften the structure, and improve malleability. That is, annealing reduces lattice defects in the metal structure and recrystallizes the material, so residual stress also decreases and the material is softened.

Therefore, when a threaded shaft is manufactured using the annealing heat treatment temperature of the related art and the manufacturing method of the related art, which is described above, it is conceivable that the tempered portion 11 may not actually remain.

Specifically, as illustrated in Fig. 2A, the round bar material 2 is refined by quenching and tempering, and the tempered portion 11 is formed, but as illustrated in Fig. 2B, due to annealing, the softened layer 12 is formed in a radial center of the round bar material 1. Since annealing is performed at a high temperature, the hardness decreases to, for example, 0 to 9 (HRC). Then, after performing peeling processing, centerless grinding, and rolling processing, the surface is induction hardened, thereby as illustrated in Fig. 2C, the hardened layer 13 hardened by induction hardening is formed on an outermost surface, and a hardened layer 14 is further formed by induction hardening between the softened layer 12 and the hardened layer 13 on the surface.

The inventors thought that when the above-described manufacturing method of the related art is performed under general heat treatment conditions, the softened layer 12 is in a center of the threaded shaft, and distortion of the threaded shaft may occur during rolling processing and induction hardening, causing a decrease in dimensional accuracy.

Therefore, the inventors of the present invention conducted further intensive studies on a method for manufacturing a ball screw shaft that can reduce deformation, has high precision, and has excellent quality.

First, the inventors of the present invention investigated causes of a decrease in dimensional accuracy when manufacturing a ball screw shaft using a cold finished bar (coil-to-bar) obtained from a steel material manufacturer.

When obtaining a cold finished bar, generally, a part of the screw material is designated as a range and the hardness of the cold finished rod is instructed to the steel material manufacturer. However, in the cold finished bar, a surface layer is hardened but the hardness decreases as the layer is closer to a core portion. Therefore, the surface of the cold finished bar has the designated hardness, but the hardness of the core portion is unknown, and thus the cold finished bar as received cannot achieve the required accuracy.

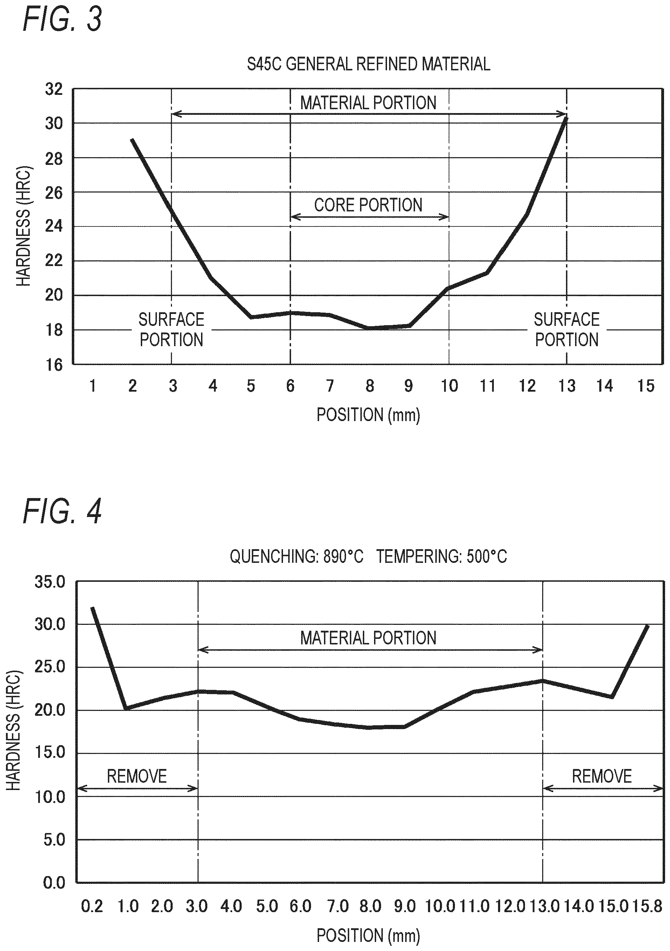

Fig. 3 is a graph diagram illustrating a relationship between hardness and position of S45C material (manufactured by Nippon Steel Corporation) that has been refined after the coil material has been subjected to coil drawing. A measured diameter of the S45C material is 16 mm. In the graph diagram illustrated in Fig. 3, one end of the diameter in a cross section perpendicular to a longitudinal direction of the S45C material is set as 0 mm, and the other end is set as 16 mm. In the specification, the longitudinal direction of a screw, a screw material, a refined material, or the like refers to a direction in which a threaded shaft extends.

As a result of measuring the hardness of the S45C material tempered after coil drawing, among the material portions excluding a region of a predetermined thickness (for example, 3 mm) from the surface, in a surface part represented by 3 mm and 13 mm positions illustrated in Fig. 3, and a core portion represented in a range of 6 mm to 10 mm, the core portion shows a lower value by about 12 (HRC), resulting in a graph depicting a U curve.

As such, if the hardness is designated, although the hardness of the obtained S45C refined material is generally recognized to be within the designated range, in reality, there is a large difference in hardness between the surface portion and the core portion.

Such variation in hardness depending on location occurs similarly even when other steel types are used, for example, SAE4150 material (equivalent to SCM445 of JIS G 4053:2016 (alloy steel for mechanical structures)) specified by the American Society of Automotive Engineers (SAE).

When using SAE4150 material to perform quenching by heating and cooling at 850°C for 120 minutes and perform tempering by heating and cooling at 650°C for 300 minutes, in a cross section perpendicular to the longitudinal direction, when comparing the hardness between the center and a position 0.5r (1/2 of radius r) away from the center, a variation of about 4 (HRC) at most occurs.

When the SAE4150 material is long, variation occurs also in the longitudinal direction (axial direction). For example, when the variation in the cross section perpendicular to the longitudinal direction is 4 (HRC), the variation in hardness within one SAE4150 material can reach as much as 12 (HRC).

Regarding cold finished bars (coil-to-bar) obtained from steel manufacturers, processing in which the coil material is returned to a straight bar is performed at the steel manufacturer, so the processing causes variation in hardness. In other words, in processing of gradually processing a coiled material into a linear shape using a roller, to make a twisted or bent material into a linear shape, there are parts that are stretched or compressed, which causes variation in hardness.

The inventors of the present application have discovered that when thread rolling is actually performed using a material with variation in hardness as described above and the accuracy of the tooth profile, tooth trace, and thread pitch is measured, errors will occur in a gear testing machine and measurement will be difficult.

Specifically, when a ball screw shaft having 20 grooves in the longitudinal direction is manufactured using the above-described refining method using SAE4150 material, excluding one groove at each end, a cumulative pitch error is 16 µm (0.016 mm), which is the sum of differences between adjacent pitches for 18 grooves, which is a large error.

The above-described data in which the cumulative pitch error is 16 µm (0.016 mm) is data when 550 steel materials are stored in a batch furnace. If the number of steel materials in the batch furnace were increased to 1400, for example, the variation would further increase, the hardness difference would exceed 7 (HRC), the cumulative pitch error would exceed 30 µm, and the accuracy would drop significantly.

As described above, when the pitch variation increases, peeling tends to occur on a race surface (raceway surface) of a groove in which a ball rolls, and when a rotation direction changes, uneven operation tends to occur. The lead cumulative pitch errors after rolling are the same except for the high frequency correction in the next processing.

Meanwhile, a lead accuracy of ball screws is specified by JIS B 1192-3:2018, and for example, when the screw accuracy grade is Ct10, a permissible variation value (ν₃₀₀) is 210 µm, so when an effective screw length is 72 mm, a permissible displacement is 50.4 µm. However, for example, when a target value for the screw accuracy grade is between Ct7 and Ct8, the permissible variation value (ν₃₀₀) is about 75 µm, so when the effective screw length is 72 mm, the permissible displacement is 18 µm. In other words, if the grade is Ct10, all cumulative pitch errors when the number of steel materials in the batch furnace is 1400 are within the standard, but if a ball screw shaft with even higher precision is to be manufactured, the errors will be outside the standard. Therefore, there is an increasing demand for a method for manufacturing a ball screw shaft that can further reduce cumulative pitch errors.

When grooves of the ball screw shaft are processed by through-feed rolling, a yield will be as low as about 60%, resulting in a decrease in productivity. Therefore, there is an increasing demand for a manufacturing method using infeed rolling that can stably manufacture mechanical structural members at low cost.

Therefore, the inventors of the present invention believe that if variations in metal structure and hardness can be significantly reduced in steel materials before plastic working, particularly rolling, processing accuracy can be improved, so the inventors studied the refining conditions for steel materials.

For example, even when a steel material is heated to a typical quenching temperature, cooling starts from the surface, so the hardness of the core portion becomes significantly lower and the hardness of the surface becomes higher. When the steel material is cooled without being heated to the core portion, the difference in hardness between the core portion and the surface becomes even more significant.

When the tempering temperature is increased to, for example, 570°C, to reduce the surface hardness, the hardness of the core portion further decreases, making it difficult to make the hardness and structure uniform.

As a result of the above-described considerations, the inventors of the present invention have discovered that a highly accurate mechanical structural member can be obtained by reducing the variation in hardness in steel materials after quenching, selecting the conditions under which a uniform martensite structure is formed, determining a target value of hardness after tempering, and determining the tempering temperature.

The present invention has been made based on such findings.

Embodiments of the present invention will be described in detail below. The present invention is not limited to the embodiments described below, and can be implemented with any changes within a scope of the gist of the present invention.

### [Method for Manufacturing Mechanical Structural Member]

The present embodiment is a manufacturing method for manufacturing a mechanical structural member, which will be described below, and includes refining processing for refining a steel material to obtain a refined material having predetermined characteristics, surface removal processing for obtaining a material by removing a predetermined thickness from a surface of the refined material, plastic working processing for obtaining a processed material by performing plastic working on the surface of the material where grooves and teeth are formed, and induction hardening processing in which the processed material is subjected to induction hardening. Neither annealing nor annealing is performed between the refining processing and the plastic working processing.

Hereinafter, as a first embodiment, a method for manufacturing a mechanical structural member will be specifically described, and as a second embodiment, a manufacturing method for manufacturing a ball screw shaft among mechanical structural members will be specifically described.

### <First Embodiment>

### (Refining Processing)

The refining processing is a processing of refining a steel material and obtaining a refined material having a sorbite structure in which the Rockwell hardness in a material portion excluding a predetermined thickness from the surface is 13 to 28 (HRC), and a variation in Rockwell hardness in the material portion is within 6 (HRC).

The refining processing generally refers to quenching processing and tempering processing, and is processing that can adjust the hardness of the steel material.

In the specification, "Rockwell hardness" is a value converted from the value measured according to Vickers hardness test described in JIS Z 2244:2009.

In the present embodiment, in the quenching processing, the steel material is heated to a predetermined temperature, held, and then cooled. Regarding the heating temperature and holding time in the quenching processing, it is preferable to select conditions such that the structure of the steel material after the quenching processing becomes a uniform martensitic single phase structure and the crystal grains do not become coarse.

A uniform martensitic single phase structure means that the grain size of the structure is uniform from the surface to the center, and is not a mixed structure of ferrite and martensite, but is in a state where the austenite structure is completely transformed to martensite. However, when the structure is quantitatively measured using a scanning electron microscope, transmission electron microscope, X-ray diffraction method, or the like, it is not necessary that the martensite structure alone accounts for 100 area%, and ferrite and the like may inevitably remain as impurities.

By confirmation, it can be determined that during quenching, the inside of the furnace was uniformly heated, even the temperature of the center of the steel material rose, and the steel material completely became an austenite structure.

Conditions such as temperature and time during quenching to keep the variation in structure and hardness of the steel material after quenching within the above-described ranges vary depending on the composition of the used steel material and the type of furnace. For example, regarding the quenching temperature, based on a phase diagram of steel, depending on an amount of contained carbon, the steel material can be made into a complete austenite single phase structure by setting the furnace at a temperature equal to or higher than A3 transformation temperature and sufficiently heating a workpiece to the center.

When the steel material is completely made into an austenitic structure and then rapidly cooled, the martensitic transformation can sufficiently proceed. The cooling method is not particularly limited, but cooling with water (water cooling), cooling with oil (oil cooling), or the like can be used.

Oil cooling can prevent the formation of a martensitic coarsening structure and prevent a test material from becoming brittle and cracking after quenching.

On the other hand, when cooling with water, many water vapor bubbles adhere to a surface of the steel material after quenching, and due to the insulation effect of the bubbles, rapid cooling may not be possible and variation in hardness may occur. Therefore, it is desirable to use oil cooling.

When martensitic transformation has not progressed sufficiently after cooling, it is also possible to adopt a method of rapidly cooling and then maintaining the low temperature further by sub-zero treatment or the like to allow martensitic transformation to proceed. However, since cooling equipment and processing become complicated and the manufacturing cost increases, it is preferable to advance the martensitic transformation by a normal cooling method.

Especially, in the present embodiment, it is also an important factor to reduce variation in Rockwell hardness in a material portion of the steel material after quenching, so it is preferable to select oil cooling, which is less likely to cause variations in hardness.

As other conditions in the quenching processing, as the number of materials subjected to the quenching treatment increases, it generally becomes difficult to make the quenching temperature and cooling conditions uniform, so it is preferable to adjust the number of materials subjected to the quenching treatment as well.

As a specific method for determining the conditions (heating temperature and heating time) of the quenching processing, one method is to use a test material having substantially the same shape and composition as the steel material to be used, and to perform quenching test processing on the test material in which the test material is quenched under various conditions. In other words, as the quenching test processing, before the refining processing, the structure of the test materials that had been quenched under various conditions is observed to check whether the structure of the test material is a uniform martensitic single phase structure, and then the quenching heating conditions that result in a uniform martensitic single phase structure are selected. In the present embodiment, as will be described below, the conditions for the tempering processing are selected so that the Rockwell hardness and variation in the material portion after the tempering processing are within desired ranges. However, to keep the hardness and variation within the above-described desired ranges after the tempering processing, even after the quenching processing, it is preferable to measure the variation in Rockwell hardness in the material portion and select quenching heating conditions such that the variation is within 6 (HRC).

After the above-described quenching processing, tempering processing is performed as described above, and the obtained refined material is made into a sorbite structure (including a microuniform structure equivalent to sorbite) which is a uniform microstructure. Since the refined material made into a sorbite structure has ductility and mechanical strength necessary for plastic working, the processing accuracy can be improved by the tempering processing.

Through the tempering processing, the Rockwell hardness of the material portion is set to 13 to 28 (HRC), and the variation in Rockwell hardness in the material portion is made to be within 6 (HRC).

When the Rockwell hardness of the material portion of the refined material obtained by the tempering processing is less than 13 (HRC), plastic working becomes difficult. On the other hand, when the Rockwell hardness of the material portion exceeds 28 (HRC), the surface of the material after surface removal becomes hard, so processing is possible, but the lifespan of a die, which is a tool, is significantly reduced. When the variation in Rockwell hardness exceeds 6 (HRC), the thread processing accuracy decreases.

Therefore, the tempering processing shall be performed so that the Rockwell hardness of the material portion of the refined material after the tempering processing is 13 to 28 (HRC) and the variation thereof is within 6 (HRC).

To control the Rockwell hardness of the material portion and variation thereof as described above by tempering, the heating temperature in the tempering processing is preferably adjusted based on a graph of the tempering temperature and hardness specific to the used steel material. Regarding the graph of the tempering temperature and hardness specific to the steel material, a known graph may be obtained, or a graph may be created by tempering the used steel material at various temperatures and measuring the hardness thereafter.

Similar to the method of determining the conditions of the quenching processing, also in the tempering processing, a specific method for determining the heating conditions is to use a test material after quenching and temper the test material under various conditions.

That is, as the tempering test processing, the structures of the test materials tempered under various conditions are observed and the variation in hardness is measured. Tempering heating conditions are selected such that a sorbite structure is formed, the Rockwell hardness of the material portion of the test material is 13 to 28 (HRC), and the variation in Rockwell hardness in the material portion is within 6 (HRC). Thereby, the actual tempering processing can be performed using the tempering heating conditions selected in the tempering test processing.

The Rockwell hardness of the material portion of the test material is preferably 20 to 26 (HRC). The variation in Rockwell hardness is preferably within 2 (HRC), more preferably within 1 (HRC).

The variation in hardness after the tempering test processing is preferably measured at a plurality of different measurement points in a core region, and when a difference between a maximum value and a minimum value of Rockwell hardness at the plurality of measurement points is within 6 (HRC), it can be considered that the variation in hardness is within 6 (HRC).

Depending on the type of steel material, the hardness after quenching may affect the hardness after tempering. Therefore, in addition to determining the tempering temperature based on the graph of tempering temperature and hardness, it is preferable that the final tempering heating conditions determined by also considering the measurement results of the hardness test of the test material after quenching.

Although the details will be described below, the hardness after quenching changes depending on the amount of carbon contained in the steel material. Therefore, when the hardness after quenching is equal to or higher than critical hardness, it can be determined that minimum quenching has been performed.

For example, the hardness measurement result of the core portion of the test material after the quenching test is equal to or higher than the critical hardness, but if it is low, the hardness of the test material after the tempering test may be lower than a desired range. Therefore, it is preferable to set the tempering temperature to a lower temperature than the temperature derived from the graph, and to set the tempering heating conditions so that the hardness of the refined material becomes harder after tempering.

On the other hand, when the hardness measurement result of the test material after the tempering test shows that the entire material portion is hard, there is a possibility that the hardness of the test material after the tempering test will be higher than the desired range. Therefore, it is preferable to set the tempering temperature higher than the temperature derived from the graph and set the tempering heating conditions so that the hardness of the refined material after tempering is reduced.

However, when the core portion hardness measurement result is lower than the critical hardness, it is assumed that either the core portion of the steel material has not been quenched (the core portion has not reached the heating temperature), or the temperature inside the furnace varies. Therefore, it is preferable to review the heating conditions, such as increasing the heating temperature during quenching or lengthening the soaking conditions.

Measurement of the hardness and observation of the structure of the test material after the quenching test can be omitted. Here, it is preferable that before the quenching processing, quenching is performed using a refined test material having approximately the same shape and composition as the steel material, and then a refining test processing is performed in which the refining test material after quenching is tempered at a heating temperature selected based on the relationship between the tempering temperature and hardness specific to the steel material.

The refining test processing is processing of selecting quenching heating conditions and tempering heating conditions such that the structure of the refined test material after tempering becomes a sorbite structure, the Rockwell hardness of the material portion is 13 to 28 (HRC), and the variation in Rockwell hardness is within 6 (HRC).

Therefore, it is preferable for the actual quenching processing to be performed using the quenching heating conditions selected in the refining test processing, and the tempering processing to be performed using the tempering heating conditions selected in the tempering test processing.

In the refining test processing, when a sorbite structure was not formed as a result of tempering the refining test material after quenching, since there is a possibility that martensitic transformation has not been completed after quenching, for example, the heating conditions and cooling conditions of the quenching processing should be reviewed.

When the hardness or the variation thereof is not within the desired range, since the quenching and tempering temperatures may not be appropriate or the core portion may not have been completely quenched, the heating conditions or the like for the quenching and tempering processing should be reviewed.

### (Surface Removal Processing)

After the above-described refining processing, the hardness of the refined material increases rapidly from a certain position toward the surface. Therefore, in general, when forming grooves and teeth of a mechanical structural member by plastic working, plastic working is performed after a predetermined thickness is removed (cut and ground) from the surface of the refined material to obtain a material. By the plastic working, a surface shape of the refined material when viewed from the side has a plurality of grooves and teeth between each groove. Here, the thickness to be removed when S45C material is selected as the steel material will be described below.

Fig. 4 is a graph diagram illustrating a relationship between hardness and position of a refined material in a present embodiment, where a vertical axis shows the hardness and a horizontal axis shows a position of a surface layer in a cross section perpendicular to a longitudinal direction of the refined material. In Fig. 4, the hardness is measured up to a vicinity of the surface. For the refined material shown in Fig. 4, the heating temperature in the quenching processing was set to 890°C and the soaking time was set to 30 minutes to uniformly heat the inside of the furnace, and the material is cooled after the heating temperature in the tempering processing was set to 500°C and the holding time was set to 120 minutes. Accordingly, a sorbite structure is obtained.

As illustrated in Fig. 4, the hardness of the refined material increases rapidly from a depth of about 1.0 mm from the surface as the layer approaches the surface.

Therefore, in the present embodiment, after the refining processing, a region from the surface to a predetermined thickness, that is, the region including at least the part where the hardness of the refined material is rapidly increasing, is removed. In the present embodiment, for example, a 3.0 mm thick region is removed from the surface to obtain the material. As a result, the hardness of the entire material portion can be made as 13 to 28 (HRC), and the variation in hardness can be kept within 6 (HRC).

In Fig. 4, the region where the hardness increases rapidly is about 1.0 mm from the surface of the refined material, so the region to be removed only needs to include at least a region where the hardness is rapidly increasing (an area up to about 1.0 mm from the surface), and it is preferable to remove to a depth of about 2.0 mm to 3.0 mm from the surface.

As illustrated in Fig. 4, when the material is removed to a depth of 3.0 mm from the surface of the refined material, the hardness of the material portion before plastic working is slightly lower near the center and slightly higher near the surface, but the hardness is approximately uniform in a radial direction of the material portion.

In the present embodiment, although the surface removal processing was implemented, the surface removal processing is not an essential processing. For example, after the above-described refining processing, when the structure of the obtained refined material is a sorbite structure, and the Rockwell hardness of the entire refined material is 13 to 28 (HRC) and the variation in Rockwell hardness is within 6 (HRC), the surface removal processing can be omitted. Here, the yield can be further improved.

### (Plastic Working Processing)

In the present embodiment, in the surface removal processing, a region from the surface to a depth of about 3.0 mm is removed to obtain a refined material (material) with a diameter of about 10 mm. Then, the surface of the material on which grooves and teeth are to be formed is subjected to plastic working to form grooves and teeth of a desired shape, thereby obtaining a processed material. After plastic working, the hardness of a screw teeth tip (on an outer diameter side of the shaft) is approximately 33 (HRC), and the hardness of a screw teeth bottom (near the root) is approximately 27 (HRC). In other words, the region from 0 mm to 0.5 mm from the teeth bottom of the screw shaft after plastic working is hardened by the plastic working, but in regions other than the hardened region, the hardness remains the same as the hardness of the material portion before plastic working.

As described above, when the structure and hardness of the refined material after refining are within the desired range and the surface removal processing is not performed, in the above-described plastic working processing, plastic working is performed on the surface of the refined material after refining where grooves and teeth are to be formed. Even then, the hardness of the screw tooth tips and screw tooth bottoms after plastic working will be the same as above, whereas in the region other than the region hardened by plastic working, the hardness remains the same as the hardness of the refined material before plastic working.

In the present embodiment, the hardness is adjusted to be substantially uniform through the above-described refining processing, and the surface has a hardness suitable for plastic working. Therefore, there is no need to perform either annealing or annealing between the refining processing and the plastic working processing.

### (Induction Hardening Processing)

Next, the obtained processed material is subjected to induction hardening. In the present embodiment, for example, a ball screw shaft is targeted, and the groove of the ball screw shaft allows a ball to roll between the groove and a nut, thereby converting rotational motion into linear motion, or converting linear motion into rotational motion. Therefore, the groove in which the ball rolls (raceway surface) receives a large amount of pressure at a contact area with the ball, so to impart hardness to the surface of the groove and prevent peeling due to contact with the ball, it is necessary to transform the surface of the groove into martensite.

In the present embodiment, the conditions for induction hardening are not particularly limited, and the conditions are set such that the surface becomes a uniform martensitic single phase structure.

Through the above-described processing, the mechanical structural member according to the present embodiment can be obtained.

According to the method for manufacturing a mechanical structural member according to the present embodiment, the hardness of the material before forming the grooves by plastic working has a structure and hardness suitable for plastic working, and the variation in hardness from the surface to a deep part is within 6 (HRC). Therefore, wear of the tool can be reduced, deformation due to plastic working can be prevented, and a mechanical structural member having high precision and excellent quality can be obtained.

According to the manufacturing method according to the present embodiment, 50% or more of the diameter of the refined material before the surface removal processing can be made to have substantially uniform hardness with little variation, so when performing the surface removal processing, the depth of a part to be removed can be made shallow, and thus the yield can be improved.

In the embodiment, since the steel material is refined so that the range and variation of hardness is within a predetermined range, the ball screw shaft obtained by performing the subsequent plastic working and induction hardening has excellent screw precision. When annealing and annealing are not performed, productivity can be improved and manufacturing costs can be reduced. When performing the plastic working processing to form grooves and teeth, if the hardness and variation in hardness of the material are within the above-described range, and a sorbite structure (including a fine uniform structure equivalent to sorbite) is also formed, processing such as annealing may be performed between the refining processing and the plastic working processing, and in either case, a ball screw with excellent screw precision can be obtained.

When manufacturing the above-described mechanical structural members, heat treatment processing before plastic working is performed on the steel material, that is, heat treatment processing such as refining, normalizing, annealing, and annealing may be performed as a series of processing. As such, when heat treatment is performed in a series of processing, production efficiency can be improved and manufacturing costs can be reduced. As a result, CO₂ emissions can be reduced in the entire manufacturing processing including the next processing, and thus the overall manufacturing cost can also be reduced.

As described above, the present embodiment refines the steel material for forming grooves by plastic working, but is particularly suitable for forming grooves by infeed rolling.

Infeed rolling requires that a workpiece and a thread be parallel, that the workpiece not extend in the axial direction, and deform only in a radial direction where the thread is formed. According to the manufacturing method according to the present embodiment, the Rockwell hardness of the material portion is 13 to 28 (HRC), and the material is refined to a relatively hard state, so it is possible to prevent the workpiece from extending in the axial direction during infeed rolling, and it is possible to easily obtain a mechanical structural member with excellent processing accuracy. Therefore, by infeed rolling using the refined material obtained by the method according to the present embodiment, the yield can be improved and manufacturing costs can be reduced.

### <Second Embodiment>

As a second embodiment, a method for manufacturing a ball screw shaft will be specifically described. In the second embodiment illustrated below, the similar parts as in the first embodiment are indicated by the same names, and detailed description of each processing is partially omitted.

### (Refining Processing)

SAE4150 round bar material is prepared as a steel material, and refining processing is performed using, for example, a continuous furnace.

First, quenching processing is performed, and the heating temperature in the quenching processing is preferably set at approximately 780°C or higher, which is A3 transformation point, based on the carbon content (0.48 mass% to 0.53 mass%) of the SAE4150 material and the phase diagram, and it is more preferable to set the temperature to 830°C or higher, and it is further preferable to set the temperature lower than 870°C.

In the present embodiment, a continuous furnace is used to perform the refining, but the type of furnace is not particularly limited. When refining is performed in a continuous furnace, refining is performed in the atmosphere, so it is preferable to minimize the number of open regions and heat in a short time to prevent the occurrence of cracks due to the formation of a decarburized layer. Using a continuous furnace allows continuous heating with direct flame, resulting in excellent heat transfer coefficient. Therefore, in addition to preventing uneven heating, only the necessary number of steel materials can be refined compared to the case of using a batch furnace. Therefore, by using a continuous furnace, it is possible to prevent an increase in the number of products in stock, and it is also possible to reduce energy consumption and CO₂ emissions.

When using a continuous furnace, the heating holding time is preferably 15 to 30 minutes, for example. When the steel material is long, the soaking time can be shortened by arranging the materials horizontally in a parallel shape to prevent the occurrence of bending of the steel material.

On the other hand, with batch furnaces, it may be difficult to equalize the temperature inside the furnace depending on the location and number of carbon heaters, and when a large number of steel materials are refined at once, variations increase in proportion to the number of steel materials. Such variations tend to increase as the volume inside the furnace increases. When the steel material is long and needs to be refined while standing in a batch furnace, the heat treatment tends to be more uneven and variations increase, so it may be difficult to achieve high accuracy.

However, a batch furnace can be adjusted to a vacuum atmosphere or an inert gas atmosphere, which has the advantage of being able to perform stable refining. Therefore, depending on the size of the steel material, refining conditions, and the like, it is also possible to use a batch furnace.

However, when using a batch furnace, to make the heating state uniform, it is preferable to set the soaking time and holding time considering how the heater is placed, how the workpiece is placed, and the capacity of the furnace, and the time only needs to be set so that the material is heated to the core portion at the required predetermined temperature.

In the present embodiment, the heating conditions in the quenching processing are, for example, 840°C for 20 minutes. Then, by cooling with oil, the structure and hardness of the steel material after the quenching processing can be adjusted to a predetermined range.

Here, as a specific method for determining the conditions of the quenching processing, as in the first embodiment, one method is to use a test material having substantially the same shape and composition as the used steel material (SAE4150 material) and perform quenching test processing in which the test materials are quenched under various conditions. In particular, the heating conditions for the actual quenching processing can be determined by observing the structures of test materials that have been quenched under various conditions and confirming whether the test materials have a uniform martensitic single phase structure.

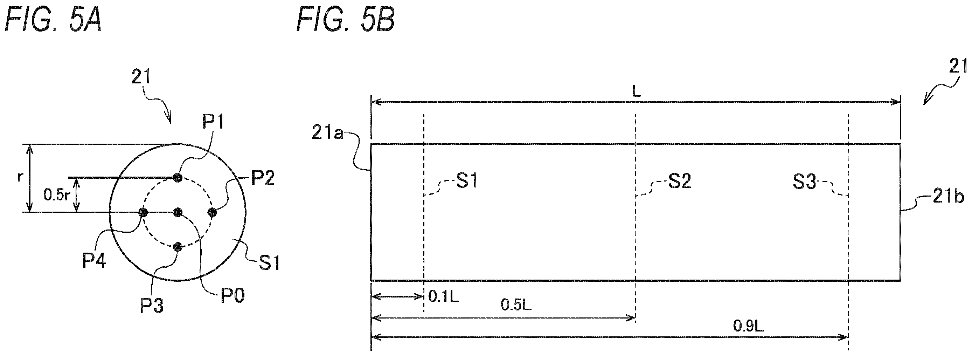

Fig. 5A is a schematic cross-sectional view illustrating a test material for illustrating hardness measurement positions in the present embodiment, and Fig. 5B is a side view thereof. Hardness measurement may be performed at any number of different measurement points, and it is preferable to measure at a plurality of measurement points where differences in hardness are likely to appear in the material portion excluding a predetermined thickness from the surface.

In particular, when a length of a test material 21 in a longitudinal direction is set as L, a cross section perpendicular to the longitudinal direction at a position of 0.1L from one end 21a of the test material 21 toward the other end 21b is set as a surface S1, a cross section perpendicular to the longitudinal direction at a position 0.5L from the one end 21a of the test material 21 toward the other end 21b is set as a surface S2, and a cross section perpendicular to the longitudinal direction at a position of 0.9L from the one end 21a to the other end 21b of the test material 21 is set as a surface S3. The surfaces S1 to S3 are defined as axial measurement surfaces.

As illustrated in Fig. 5A, for example, regarding the surface S1, when a center is set as a measurement point P0 and a distance from the measurement point P0 to one point on the outer periphery is set as a radius r, four measurement points P1, P2, P3, and P4 are selected at approximately equal intervals on the circumference 0.5r apart from the measurement point P0, and the measurement points P0 to P4 are set as radial measurement positions. Similarly, radial measurement positions represented by the measurement points P0 to P4 are set for the surfaces S2 and S3.

In the present embodiment, the variation in hardness can be determined by a difference between the maximum and minimum values when comparing the Rockwell hardness at the measurement position throughout the core region in the same plane perpendicular to the longitudinal direction in the core region of test material 21.

That is, the comparison of Rockwell hardness within the same plane is a comparison of the hardness at five radial measurement positions (measurement points P0 to P4) for each surface C. The comparison of Rockwell hardness at the measurement position of the entire core region is a comparison of the Rockwell hardness at five radial measurement positions (measurement points P0 to P4) on all three axial measurement surfaces (S1 to S3).

In the present embodiment, it is preferable to select heating conditions that satisfy all of the following conditions (a) to (c) as the heating conditions in the actual quenching processing.
(a) On each surface, the difference between the maximum value and minimum value of Rockwell hardness within the same surface (measurement points P0 to P4), that is, at five locations, is 2 (HRC) or less.
(b) The difference between the maximum value and minimum value of Rockwell hardness at five radial measurement positions (measurement points P0 to P4) on the three axial measurement surfaces (surfaces S1 to S3), that is, 15 locations, is 6 (HRC) or less.
(c) The maximum and minimum values of Rockwell hardness at the five radial measurement positions (measurement points P0 to P4) on the three axial measurement surfaces (surfaces S1 to S3), that is, 15 locations, are all within a range of 16 to 26 (HRC). Regarding the maximum and minimum values of Rockwell hardness, it is preferable that Rockwell hardness be within the range of 16 to 26 (HRC) after quenching for all test materials, including not only the 15 locations in one piece but also variations within the furnace and variations within the lot.

After the quenching processing, tempering processing is performed. The heating temperature in the tempering processing is determined based on the graph of tempering temperature and hardness of SAE4150 material.

In the present embodiment, to determine the heating temperature in the tempering processing so that the hardness of the material portion of the refined material after the tempering processing is within the range of 13 to 28 (HRC), in the case of SAE4150 material, the temperature is preferably about 650°C or higher, for example. The upper limit of the tempering temperature is preferably set at a temperature lower than 720°C, which is A1 transformation point of SAE4150 material.

However, the actual relationship between tempering temperature and hardness varies depending on the type of furnace, the season and the batch size for refining, the length and shape of the workpiece, and the like. Therefore, it is preferable to determine the actual tempering temperature by referring to a graph created under the same conditions as the actual tempering conditions and also considering the hardness of the steel material after quenching. Specifically, using the test material for which the quenching heating conditions have been determined, tempering is performed by adjusting the tempering temperature higher or lower than the tempering temperature obtained from the graph, and then by measuring the hardness of the material portion of the obtained refined material, the optimum tempering temperature can be adjusted. Therefore, the tempering temperature only needs to be adjusted so that the core portion is heated at the required predetermined temperature.

In the present embodiment, the tempering condition is maintained at a temperature of 700°C for 60 minutes, and then cooled. This results in a sorbite structure.

If the heating in the quenching and tempering processing is performed in the atmosphere, the carbon (C) contained in the steel material reacts with oxygen (O₂) and water vapor in the atmosphere, such that a decarburized layer is generated, which may cause cracking.

Material surface decarburization and ferrite decarburization occur due to various factors. Due to overheating, the reaction between carbon and oxygen or water vapor in the atmosphere progresses from the surface layer of the steel material toward the center, forming a decarburized layer where carbon is removed. The decarburized layer is also formed by the atmosphere in the furnace during the heat treatment in the tempering processing. When rust or black scale (iron oxide) is formed on the surface of the steel material, or when scratches are formed, oxygen and carbon in iron oxide may further react to form CO₂, resulting in decarburization and leading to defects such as cracks. Such decarburization starts earlier when the temperature is closer to the quenching temperature. Therefore, the atmosphere during heating in the quenching processing and the tempering processing is preferably an inert atmosphere to prevent the bonding of carbon and oxygen, and is preferably an N₂ atmosphere considering cost and the like.

### (Surface Removal Processing)

After the above-described refining processing, a region with a thickness of, for example, 3.0 mm is removed from the surface of the refined material to obtain a refined material (material). As a result, the hardness of the material obtained by the surface removal processing falls within a range of approximately 18.0 to 23.5 (HRC), for example, as illustrated in the range of 3.0 to 13.0 mm in Fig. 4, so the hardness variation can be about 5.5 (HRC).

The thickness of the surface of the refined material to be removed needs to be selected appropriately depending on whether there is an oxidized scale on the material and the diameter, and it is preferable to set the thickness to be removed so that the range and variation in hardness after surface removal falls within the above-described range.

Similar to the first embodiment described above, when the structure and hardness of the refined material obtained by the refining processing are within the desired range, the surface removal processing can be omitted, thereby further improving the yield.

### (Plastic Working Processing)

Next, grooves and teeth are formed on a circumferential surface of the material obtained by the surface removal processing by, for example, infeed rolling, without annealing and annealing, to obtain a processed material.

In the present embodiment as well, similarly to the first embodiment, when the surface removal processing is not performed, plastic working may be performed on a peripheral surface of the refined material after refining in the plastic working processing.

### (Induction Hardening Processing)

Next, the obtained processed material is subjected to induction hardening. The conditions for induction hardening are not particularly limited, but for example, conditions such as fixed coil hardening can be used for a workpiece having a short length in the longitudinal direction, and moving coil hardening can be used for a workpiece having a long length in the longitudinal direction.

Also in the method for manufacturing a mechanical structural member according to the second embodiment, since the steel material is refined so that the range and variation of hardness is within a predetermined range, the ball screw shaft obtained by performing the subsequent plastic working and induction hardening has excellent screw precision. When annealing and annealing are not performed, productivity can be improved and manufacturing costs can be reduced.

The ball screw shaft obtained by the manufacturing method according to the present embodiment is not limited in its use, but can be used, for example, as a screw shaft for a brake actuator.

The manufacturing method according to the present invention is not limited to the method for manufacturing a ball screw shaft, and the method can be applied to mechanical structural members which require grooves and teeth to be formed by plastic working and then hardening the surfaces of the grooves and teeth by induction hardening, and also have various shapes that require high precision and excellent quality.

In addition to screw shafts such as ball screw shafts, mechanical structural members include racks, gears, and the like, and more specifically, the present invention can be applied to a method for manufacturing a ball screw, a trapezoidal screw shaft, an involute gear, a trochoid gear, a circular arc gear, a serration, and the like.

Next, a mechanical structural member according to the embodiment of the present invention will be described in detail.

### [Mechanical Structural Member]

In the mechanical structural member according to the present embodiment, grooves are formed by plastic working, and teeth are formed between a plurality of longitudinally adjacent grooves when viewed from the side. The surfaces of the tooth, that is, a tooth bottom, flank surface, and cutting edge surface, have a hardened layer formed by induction hardening and having a uniform martensitic single phase structure. The mechanical structural member has a core region having a sorbite structure, and a boundary layer formed between the core region and the hardened layer, in which a sorbite structure and a martensite structure are mixed. The mechanical structural member has a sorbite structure, has a Rockwell hardness of 13 to 28 (HRC) in the region excluding the hardened layer, and has a variation in Rockwell hardness of within 6 (HRC).

In the present embodiment, it is preferable that the variation in Rockwell hardness represents the difference between the maximum value and the minimum value when Rockwell hardness is measured at a plurality of arbitrary different measurement points in the core region. That is, it is preferable that the difference between the maximum value and the minimum value is within 6 (HRC).

The Rockwell hardness in the core region can be expressed by the Rockwell hardness at the plurality of arbitrary different measurement points. That is, it is preferable that the maximum value and minimum value are both within the range of 13 to 28 (HRC).

The Rockwell hardness in the core region is preferably 15 (HRC) or more, more preferably 17 (HRC) or more, and even more preferably 19 (HRC) or more. The Rockwell hardness in the core region is preferably over 20 (HRC), more preferably over 21.5 (HRC), even more preferably over 21.9 (HRC), and particularly preferably over 22.3 (HRC). The Rockwell hardness in the core region is preferably 26 (HRC) or less, more preferably 25 (HRC) or less, and even more preferably less than 24 (HRC). The Rockwell hardness in the core region is preferably 23.7 (HRC) or less, and more preferably 23.5 (HRC) or less.

When comparing the Rockwell hardness at the plurality of arbitrary different measurement points described above, the difference between the maximum value and the minimum value is preferably smaller than 4 (HRC), more preferably smaller than 2.5 (HRC), and even more preferably within 2.2 (HRC). The difference between the maximum value and the minimum value is preferably within 2.0 (HRC), more preferably within 1.6 (HRC), and even more preferably within 1.2 (HRC).

Since the mechanical structural member according to the present embodiment is obtained by the method for manufacturing a mechanical structural member described above, it is possible to obtain high precision and excellent quality. In the mechanical structural member according to the present embodiment, the structure of the material before grooves and teeth are formed by plastic working is a sorbite structure, and the hardness and variation are adjusted to a predetermined range. Therefore, even after induction hardening, the core region has a sorbite structure, and the Rockwell hardness and the variation thereof are within the above specified range. In particular, with respect to variation in hardness, the mechanical structural member of the present embodiment has distinctive properties compared to mechanical structural members of the related art.

Hereinafter, the measurement position of Rockwell hardness will be described using a ball screw shaft as an example of a mechanical structural member.

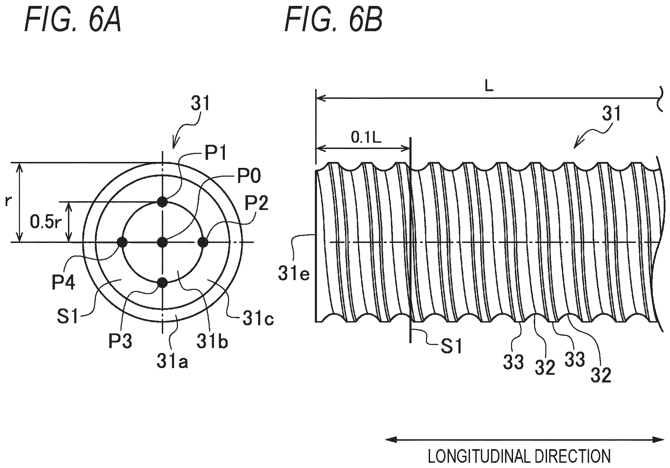

Fig. 6A is a cross-sectional view illustrating a ball screw shaft for illustrating the hardness measurement position, and Fig. 6B is a side view thereof.

As illustrated in Figs. 6A and 6B, a ball screw shaft 31 has grooves 32 formed by infeed rolling, and thereby teeth 33 are formed between each of the plurality of grooves 32 adjacent to each other in the longitudinal direction, and a hardened layer 31a is formed on the surface by induction hardening. The entire refined material has a sorbite structure before being subjected to not only infeed rolling but also plastic working and induction hardening. Then, by induction hardening, the hardened layer 31a having a uniform martensitic single phase structure is formed. Therefore, a boundary layer 31c is formed between a core region 31b having the sorbite structure and the hardened layer 31a, which changes from the sorbite structure to the martensite structure from the core region 31b to the hardened layer 31a.

In the present embodiment, the Rockwell hardness of the core region 31b and the variation thereof are defined. A method for measuring the Rockwell hardness of the core region 31b and the variation thereof will be specifically described below.

As partially illustrated in Fig. 6B, a length of the ball screw shaft 31 in the longitudinal direction is set as L, and a cross section perpendicular to the longitudinal direction at a position spaced apart, for example, 0.1L from one end 31e of the ball screw shaft 31 is set as a surface S1. Similarly, a cross section (not illustrated) at a position 0.5L away from the one end 31e is set as a surface S2, and a cross section (not illustrated) at a position 0.9L away from the one end 31e is set as surface S3. The three surfaces are defined as axial measurement surfaces.

Regarding S1, when a center is set as a measurement point P0 and a distance from the center to one point on the outer periphery of the ball screw shaft 31 is set as a radius r, four measurement points P1, P2, P3, and P4 are selected at approximately equal intervals on the circumference 0.5r apart from the measurement point P0, and the measurement points P0 to P4 are defined as radial measurement positions. Similarly, radial measurement positions represented by the measurement points P0 to P4 are set for the other two surfaces.

The variation in hardness in the present embodiment can be determined by a difference between the maximum and minimum values when comparing Rockwell hardness at all radial measurement positions on all axial measurement surfaces and in the same plane perpendicular to the longitudinal direction of the ball screw shaft 31.

That is, in the ball screw shaft 31 according to the present embodiment, the difference between the maximum value and the minimum value of Rockwell hardness at all radial measurement positions on all axial measurement surfaces is within 6 (HRC), and Rockwell hardness at all measurement positions is within the range of 13 to 28 (HRC).

When the mechanical structural member is a ball screw shaft as illustrated in Figs. 5A and 5B, the preferred range of Rockwell hardness at all measurement positions (measurement point P0 to measurement point P4 × surface S1 to surface S3) and the preferred range of variation in Rockwell hardness are the same as in the case of the mechanical structural member described above.

In the above-described embodiment, as the axial measurement surfaces, a cross section at a position 0.1L away from the one end 31e of the ball screw shaft 31, a cross section at a position 0.5L away from the one end 31e, and a cross section at a position 0.9L away from the one end 31e were selected, but the present invention is not limited thereto. For example, it is preferable to set one surface at a position selected within a range of 0.05L to 0.20L away from the one end 31e in the longitudinal direction of the ball screw shaft 31, one surface at a position selected within a range of 0.45L to 0.55L away from the one end 31e, and one surface at a position selected within a range of 0.80L to 0.95L away from the one end 31e.

The mechanical structural member according to the present invention is not limited to the above-described ball screw shaft, but targets various mechanical structural members such as a ball screw, a trapezoidal screw shaft, an involute gear, a trochoid gear, a circular arc gear, and a serration. In the case of such various shapes, it is preferable to appropriately select the Rockwell hardness measurement position according to the shape, and it is more preferable to select a plurality of measurement points where hardness variation is likely to occur. In any case, the Rockwell hardness in the core region having the sorbite structure is within the range of 13 to 28 (HRC), and the variation in Rockwell hardness is within 6 (HRC). The preferred range of Rockwell hardness in the core region and the preferred range of variation in Rockwell hardness are as described above.

### [First Example]

Invention examples and comparative examples of the mechanical structural member and the manufacturing method thereof according to the present embodiment will be described below.

### [Manufacture of Mechanical Structural Member (Ball Screw Shaft) under Conditions of Invention Example]

### (Quenching Processing)

SAE4150 steel material was prepared and quenched in a continuous furnace at the quenching temperature and time described below. In the present invention example, the heating temperature and holding time were set so that the steel material after quenching had a uniform martensitic single phase structure. Therefore, the steel material after quenching had a uniform martensitic single phase structure.

### (Tempering Processing)

Thereafter, based on a graph showing the relationship between tempering temperature and hardness of SAE4150 material, the heating temperature and holding time for tempering were set so that the Rockwell hardness was 13 to 28 (HRC).

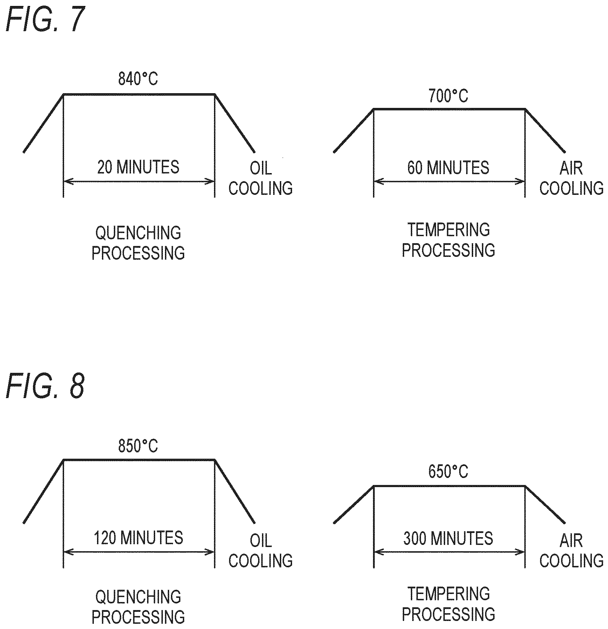

As an example, the quenching and tempering conditions of the invention example are shown in Fig. 7.

The invention example uses a continuous furnace, and as quenching processing, the material was put into the furnace heated to 840°C for 20 minutes, and then cooled with oil. Then, as tempering processing, the material was heated to 700°C, held for 60 minutes, and then cooled in air.

### [Evaluation of Hardness of Refined Material (Evaluation of Variation in Position in Continuous Furnace)]

Refining was performed under the conditions of the above-described invention example. One refined material was collected from each of three locations in the continuous furnace, and then Rockwell hardness was measured on the axial measurement surface represented by the surface S2 illustrated in Figs. 5A and 5B and the radial measurement positions represented by the measurement points P0 to P4.

Although the steel material was placed on a mesh belt and flowed through the continuous furnace, the refined material was collected from three locations: the central part in a direction perpendicular to a direction of movement of the steel material, and both side ends (left end and right end) thereof. In the present example, the refined material placed on the left end is referred to as a refined material No. 1-1, the refined material placed in the center is referred to as a refined material No. 1-2, and the refined material placed on the right end is referred to as a refined material No. 1-3.

The hardness measurement results of the refined materials No. 1-1, 1-2, and 1-3 are shown in Table 1 below.

**[Table 1]**

| Refined material No. (Invention examples) | Hardness at radial measurement positions (HRC) | | | | | Maximum value (HRC) | Minimum value (HRC) | Difference between maximum value and minimum value (HRC) |
|---|---|---|---|---|---|---|---|---|
| | P1 | P2 | P3 | P4 | P0 | | | |
| 1-1 | 23.3 | 23.1 | 23.4 | 23.1 | 23.0 | 23.4 | 23.0 | 0.4 |
| 1-2 | 23.3 | 23.3 | 23.2 | 23.3 | 22.8 | 23.3 | 22.8 | 0.5 |
| 1-3 | 23.2 | 23.5 | 23.2 | 23.3 | 22.8 | 23.5 | 22.8 | 0.7 |

### [Evaluation of Hardness of Refined Material (Evaluation of Variation in Longitudinal Position of Refined Material)]

Refining was performed under the conditions of the above-described invention example. A total of three refined materials were collected from arbitrary positions in the continuous furnace, and then for each refined material, the Rockwell hardness was measured on the axial measurement surfaces represented by the surfaces S1 to S3 illustrated in Figs. 5A and 5B and the radial measurement positions represented by the measurement points P0 to P4.

In the present example, the three refined materials are referred to as refined materials No. 1-4, 1-5, and 1-6. The hardness measurement results of each refined material are shown in Tables 2 to 4 below.

**[Table 2]**

| Refined material No. 1-4 (Invention example) | | Hardness at radial measurement positions (HRC) | | | | | Maximum value (HRC) | Minimum value (HRC) | Difference between maximum value and minimum value (HRC) |
|---|---|---|---|---|---|---|---|---|---|
| | | P1 | P2 | P3 | P4 | P0 | | | |
| Axial measurement surfaces | S1 | 22.6 | 22.3 | 21.5 | 22.7 | 23.5 | 23.5 | 21.5 | 2.0 |
| | S2 | 23.3 | 22.8 | 22.7 | 23.3 | 22.5 | 23.3 | 22.5 | 0.8 |
| | S3 | 23.4 | 22.8 | 23.7 | 22.4 | 22.5 | 23.7 | 22.4 | 1.3 |
| Maximum and minimum values in hardness in refined material No. 1-4 | | - | - | - | - | - | 23.7 | 21.5 | 2.2 |

**[Table 3]**

| Refined material No. 1-5 (Invention example) | | Hardness at radial measurement positions (HRC) | | | | | Maximum value (HRC) | Minimum value (HRC) | Difference between maximum value and minimum value (HRC) |
|---|---|---|---|---|---|---|---|---|---|
| | | P1 | P2 | P3 | P4 | P0 | | | |
| Axial measurement surfaces | S1 | 23.5 | 23.3 | 23.0 | 23.1 | 23.0 | 23.5 | 23.0 | 0.5 |
| | S2 | 22.7 | 23.2 | 22.8 | 22.8 | 22.6 | 23.2 | 22.6 | 0.6 |
| | S3 | 23.0 | 22.3 | 22.3 | 22.7 | 22.8 | 23.0 | 22.3 | 0.7 |
| Maximum and minimum values in hardness in refined material No. 1-5 | | - | - | - | - | - | 23.5 | 22.3 | 1.2 |

**[Table 4]**

| Refined material No. 1-6 (Invention example) | | Hardness at radial measurement positions (HRC) | | | | | Maximum value (HRC) | Minimum value (HRC) | Difference between maximum value and minimum value (HRC) |
|---|---|---|---|---|---|---|---|---|---|
| | | P1 | P2 | P3 | P4 | P0 | | | |
| Axial measurement surfaces | S1 | 23.0 | 23.2 | 23.0 | 23.3 | 22.8 | 23.3 | 22.8 | 0.5 |
| | S2 | 23.3 | 22.1 | 22.6 | 23.2 | 21.9 | 23.3 | 21.9 | 1.4 |
| | S3 | 23.4 | 23.3 | 23.2 | 23.5 | 23.0 | 23.5 | 23.0 | 0.5 |
| Maximum and minimum values in hardness in refined material No. 1-6 | | - | - | - | - | - | 23.5 | 21.9 | 1.6 |

### [Manufacture of Mechanical Structural Member (Ball Screw Shaft) under Condition of Comparative Example]

### (Quenching Processing)

SAE4150 steel material was prepared and quenched in a batch furnace at the heating temperature and holding time described below. In the comparative example, the structure of the steel material after quenching was not confirmed, and standard heating temperature and holding time were set.

### (Tempering Processing)

Then, the refined material of the comparative example was obtained by tempering at standard heating temperature and holding time without adjusting the hardness and air cooling.

Fig. 8 illustrates the quenching and tempering conditions of the comparative example. In the comparative example, as the quenching processing, the material was maintained at 850°C for 120 minutes and then cooled with oil. Thereafter, as tempering processing, the material was heated to 650°C, held for 300 minutes, and then cooled in air. In the quenching processing and the tempering processing of the comparative example, the holding time in the heated state is set longer than that of the invention example using a continuous furnace so that the temperature of the steel material becomes uniform.

### [Evaluation of Hardness of Refined Material (Evaluation of Variation in Position in Continuous Furnace)]

Refining was performed under the condition of the above-described comparative example. One refined material was collected from each of three locations in the batch furnace, and then Rockwell hardness was measured on the axial measurement surface represented by the surface S2 illustrated in Figs. 5A and 5B and the radial measurement positions represented by the measurement points P0 to P4.

The three refined materials of the comparative example are referred to as refined materials No. 2-1, 2-2, and 2-3, and the hardness measurement results of the materials are shown in Table 5 below.

**[Table 5]**

| Refined material No. (Comparative examples) | Hardness at radial measurement positions (HRC) | | | | | Maximum value (HRC) | Minimum value (HRC) | Difference between maximum value and minimum value (HRC) |
|---|---|---|---|---|---|---|---|---|
| | P1 | P2 | P3 | P4 | P0 | | | |
| 2-1 | 20.0 | 23.5 | 24.0 | 24.0 | 24.0 | 24.0 | 20.0 | 4.0 |
| 2-2 | 23.0 | 22.0 | 23.0 | 20.0 | 22.5 | 23.0 | 20.0 | 3.0 |
| 2-3 | 24.0 | 24.0 | 24.0 | 21.5 | 23.5 | 24.0 | 21.5 | 2.5 |

### (Surface Removal Processing)

Then, a region with a thickness of about 1.0 mm was removed from the surface of the refined material to obtain a material. As a result, the diameter of the material was reduced by 2 mm compared to the diameter of the refined material. In the present example, the surface removal processing was performed, but as described in the first and second embodiments, the surface removal processing can be omitted depending on the state of the material.

### (Plastic Working Processing)

Then, each refined material was subjected to infeed rolling processing to obtain a rolled material.

### (Induction hardening Processing)

Then, induction hardening was performed on each of the obtained rolled materials to form a hardened layer on the surface and obtain a ball screw shaft.

### [Evaluation of Accuracy of Ball Screw Shaft]

Thread accuracy was measured by calculating a cumulative pitch error of a ball screw shaft No. 1 and a ball screw shaft No. 2 manufactured using the refined material No. 1-1 and the refined material No. 2-1. The cumulative pitch error is calculated by a method of measuring a distance between adjacent grooves and accumulating the difference in distance between adjacent grooves for each ball screw shaft with an effective screw length of 72 mm and 18 grooves. The grooves at both ends of the ball screw shaft were excluded.

The measurement results are shown in Table 6 below. In Table 6, the groove number is a value in which a groove at one end of the effective thread length is designated as a groove number 1, and grooves are sequentially numbered toward the other end.

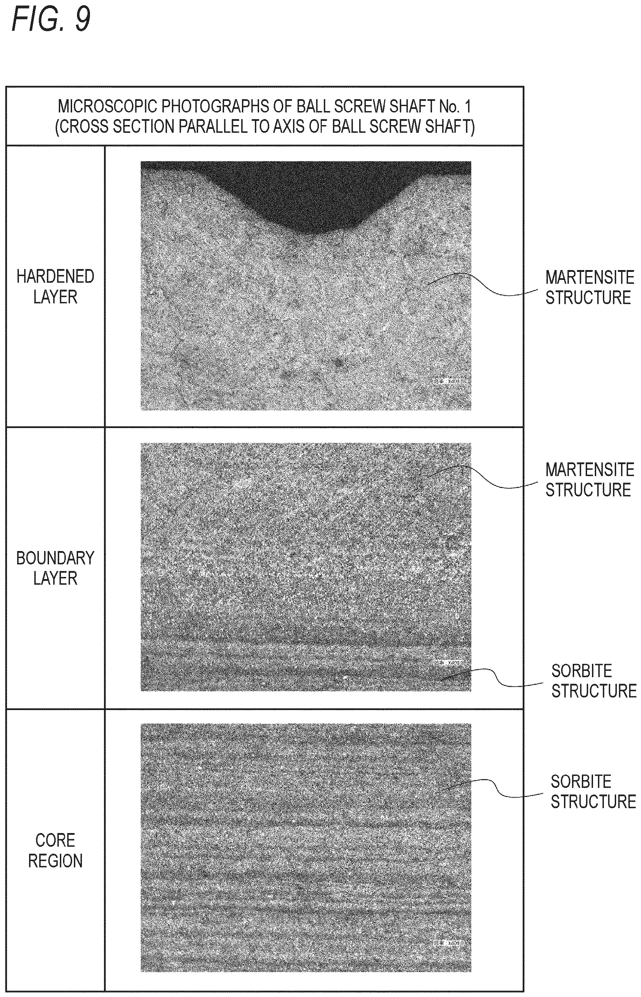

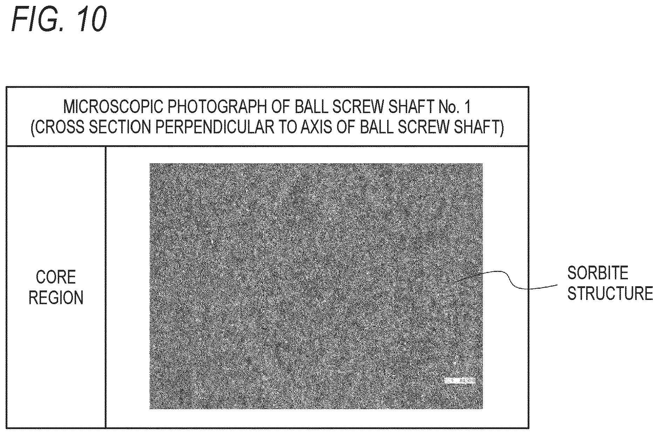

Microscopic photographs taken of the metal structure of the ball screw shaft No. 1 after induction hardening are illustrated in Figs. 9 and 10. Fig. 9 is a photograph of a cross section parallel to an axis, and Fig. 10 is a photograph of a cross section perpendicular to the axis.

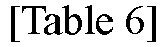

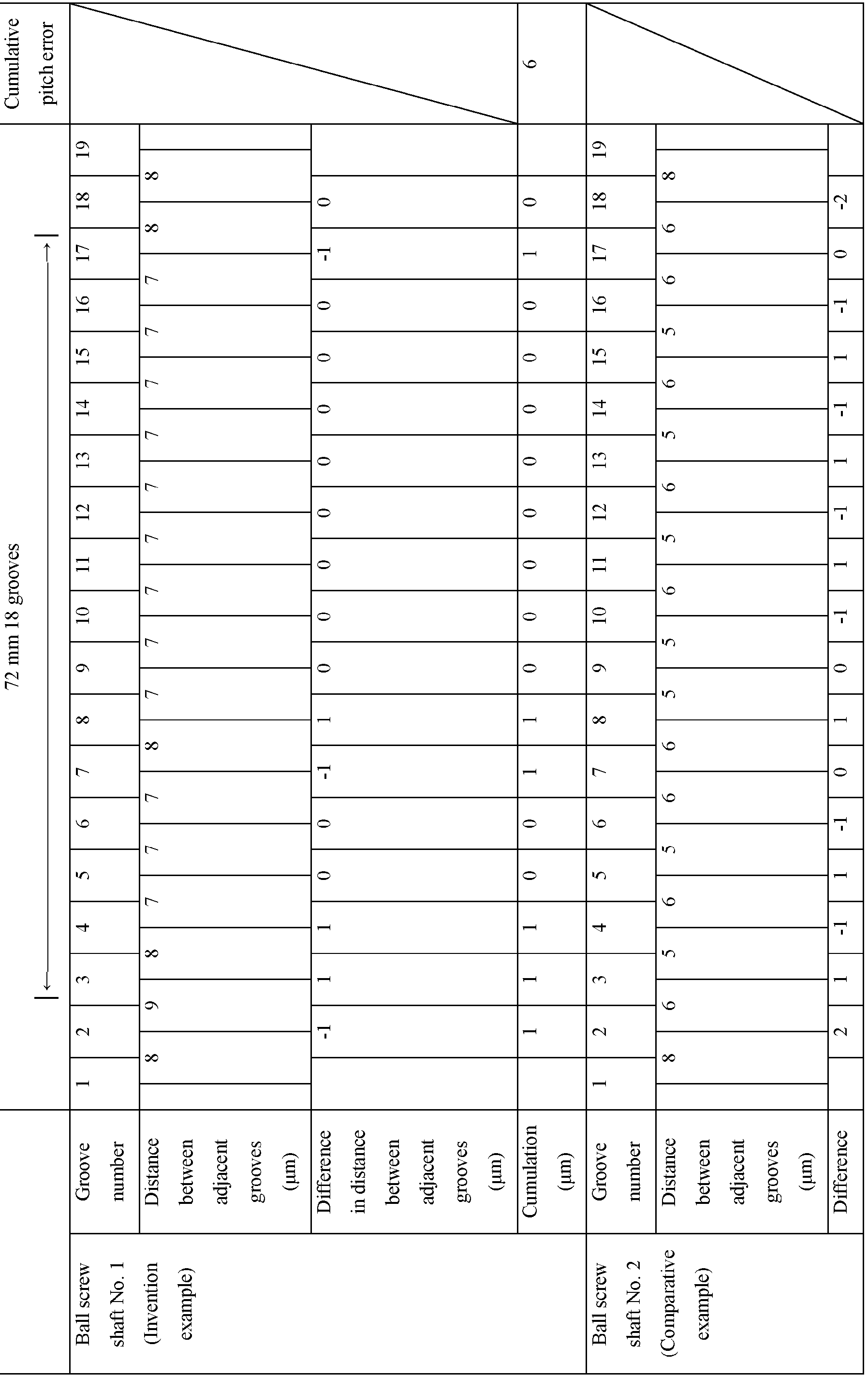

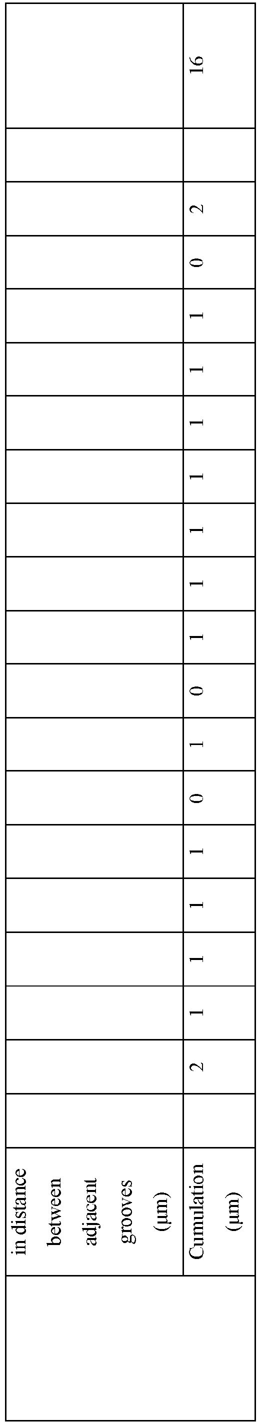

As illustrated in Table 1 above, among the refined materials obtained by the refining method of the present invention, the refined material No. 1-3 had the largest variation, and the difference between the maximum and minimum hardness values on the surface S2 was 0.7 (HRC).

On the other hand, as illustrated in Table 5 above, among the refined materials obtained by the refining method of the comparative example, the one with the largest variation was the refined material No. 2-1, and the difference between the maximum and minimum hardness values on the surface S2 was 4.0 (HRC).

From the results, in the comparative example, the difference between the maximum and minimum hardness values was 4.0 (HRC), but in the invention example, it was 0.7 (HRC). Therefore, according to the present invention, the variations in hardness of refined materials was reduced by 82.5%.

Regarding the three refined materials (refined materials No. 1-4 to 1-6) that are the present invention examples, the difference between the maximum and minimum hardness values at five axial measurement positions (P0 to P4) on the three axial measurement surfaces (S1 to S3) was confirmed. As a result, as illustrated in Tables 2 to 4, the material with the largest variation in hardness within one refined material was the refined material No. 1-4, but the difference between the maximum value and the minimum value was 2.2 (HRC), which was far below the range defined by the present invention (6 (HRC) or less).

Referring to the refined material No. 1-4 shown in Table 2, the difference between the maximum value and the minimum value within the same plane is the largest at 2.0 (HRC) of the surface S1, and the difference between the maximum value and the minimum value within the same plane is the smallest at 0.8 (HRC) of the plane S2. Therefore, from 2.0 / 0.8 = 2.5, it can be considered that the variation within one refined material is 2.5 times in one surface. Here, for the refined materials No. 2-1 to 2-3, which are comparative examples shown in Table 5, the hardness at all locations within one refined material was not measured. However, for example, in the refined material No. 2-1, the difference between the maximum and minimum hardness values was 4.0 (HRC), so it can be considered that the variation within one refined material is to be approximately 2.5 times as high as 10 (HRC).

From the result, it can be seen that the variation in hardness of the refined material obtained by the refining method of the present invention was significantly smaller than that of the comparative example.

Metal structures of the refined material obtained by the tempering method of the present invention and the tempered material of the comparative example were observed using a microscope. As a result, uniform sorbite structures were observed throughout the refined materials No. 1-1 to 1-6.

On the other hand, the refined materials No. 2-1 to 2-3 had a sorbite structure as a whole, but a nonuniform appearance was observed.

When comparing the cumulative pitch error between the ball screw shaft No. 1 as the invention example and the ball screw shaft No. 2 as the comparative example, as shown in Table 6, the cumulative pitch error of the ball screw shaft No. 1 was 6 µm, which was reduced by about 63% compared to the cumulative pitch error of the ball screw shaft No. 2 of 16 µm.

As described above, when the target value is between Ct7 and Ct8 as the thread accuracy grade, the allowable displacement will be 18 µm, so the ball screw shaft No. 2 of the comparative example is also allowed. However, the ball screw shaft No. 1 manufactured by the manufacturing method according to the present invention and having a cumulative pitch error of 6 µm has extremely high accuracy compared to the ball screw shaft No. 2 of the comparative example.

For reference, cumulative pitch errors were compared for a rolled material after the plastic working processing (before the induction hardening processing) using the refining method according to the present invention and a ball screw shaft after the induction hardening processing. As a result, the cumulative pitch error of the rolled material before the induction hardening processing was 7 µm, and the cumulative pitch error of the ball screw shaft after the induction hardening processing was 11 µm. As described above, although the lead cumulative pitch error slightly increased due to the induction hardening processing, stable accuracy could be maintained even after induction hardening was performed.

As illustrated in Fig. 9, the metal structure of the obtained ball screw shaft No. 1 had a hardened layer formed on the surface by induction hardening, and had a uniform martensitic single phase structure. In the cross section in the direction parallel to the axis in the core region, it was possible to observe metal fibers extending in a direction along the rolling direction that were generated when forming the steel material and a uniform sorbite structure. In a boundary layer between the core region and the hardened layer, a mixture of sorbite and martensite structures could be observed.

As illustrated in Fig. 10, in the cross section perpendicular to the axis in the core region, no metal fibers extending in the direction along the rolling direction were observed, and it was confirmed that a uniform sorbite structure remained even after the induction hardening processing.

As described above, the following matters are disclosed in the specification.
(1) A mechanical structural member, where
   in the mechanical structural member where a groove and a tooth are formed by plastic working,
   a hardened layer having a martensite structure formed on a surface by induction hardening,
   a core region having a sorbite structure, and
   a boundary layer in which a sorbite structure and a martensite structure are mixed, formed between the core region and the hardened layer are provided, and
   Rockwell hardness in the core region is 13 to 28 (HRC), and a variation in the Rockwell hardness is within 6 (HRC).
   According to such configuration, high precision and excellent quality can be obtained.
(2) The mechanical structural member according to (1), where
   the grooves and teeth are formed by infeed rolling.
   According to such configuration, it is possible to improve the processing accuracy of the groove.
(3) The mechanical structural member according to (1) or (2), where
   the mechanical structural member is one type selected from a screw shaft, a rack, a gear, and a serration.
   According to such configuration, machining accuracy can be further improved, particularly in the screw shaft, rack, gear, and serration.
(4) The machine structural member according to any one of (1) to (3), where
   the variation in the Rockwell hardness represents a difference between a maximum value and a minimum value when the Rockwell hardness is measured at a plurality of different arbitrary measurement points in the core region,
   the difference between the maximum value and the minimum value is within 6 (HRC), and
   the maximum value and the minimum value are both within a range of 13 to 28 (HRC).
   According to such configuration, even higher precision and superior quality can be obtained.
(5) The machine structural member according to (1), where
   when the machine structural member is a ball screw shaft with a thread groove formed by infeed rolling,
   a variation in the Rockwell hardness represents a difference between a maximum value and a minimum value when comparing the Rockwell hardness in the same plane perpendicular to a longitudinal direction in the core region and at a measurement position of an entire core region,
   a length of the ball screw shaft in the longitudinal direction is set as L,
   three surfaces perpendicular to the longitudinal direction at positions separated by a predetermined distance from one end in the longitudinal direction are set as axial measurement surfaces,
   one surface at a position selected within a range of 0.05L to 0.20L away from the one end in the longitudinal direction, one surface at a position selected within a range of 0.45L to 0.55L away from the one end in the longitudinal direction, and one surface at a position selected within a range of 0.80L to 0.95L away from the one end in the longitudinal direction are set as the axial measurement surfaces,
   a distance from a radial center of the ball screw shaft to a shaft outer diameter is set as r,
   the center of the ball screw shaft and four locations selected at approximately equal intervals on a circumference 0.5r apart from the center in a radial direction are set as radial measurement positions,
   a comparison within the same plane is a comparison of Rockwell hardness at five radial measurement positions,
   a comparison at the measurement positions of the entire core region is a comparison of the Rockwell hardness at the five radial measurement positions on the three axial measurement surfaces,
   all of the differences between the maximum value and the minimum value of Rockwell hardness in the same plane are 2 (HRC) or less,
   the difference between the maximum value and the minimum value of Rockwell hardness at the five radial measurement positions on the three axial measurement surfaces is 6 (HRC) or less, and
   all of the maximum and minimum values of Rockwell hardness at the five radial measurement positions on the three axial measurement surfaces are within a range of 13 to 28 (HRC).
   According to such configuration, the screw precision of the ball screw shaft can be improved.
(6) A manufacturing method for manufacturing a mechanical structural member according to any one of (1) to (5), the manufacturing method including:
   a refining step of refining a steel material to obtain a refined material that has a sorbite structure, has a Rockwell hardness of 13 to 28 (HRC) in a material portion excluding a predetermined thickness from a surface, and has a variation in Rockwell hardness within 6 (HRC) in the material portion;
   a plastic working step of performing plastic working on a surface of the refined material where the groove and tooth are formed to obtain a processed material; and
   an induction hardening step of performing induction hardening on the processed material.
   According to such configuration, productivity is improved, manufacturing costs can be reduced, and a mechanical structural member having high precision and excellent quality can be manufactured.
(7) The manufacturing method for manufacturing a mechanical structural member according to (6), where
   neither annealing nor annealing is performed between the refining step and the plastic working step.
   According to such configuration, productivity can be further improved and manufacturing costs can be reduced.
(8) The manufacturing method for manufacturing a mechanical structural member according to (6) or (7), where
   the plastic working is infeed rolling processing,
(9) The method for manufacturing a mechanical structural member according to any one of (6) to (8), where
   the refining step includes,
   a quenching step of heating and then cooling the steel material, and
   a tempering step of heating and cooling the steel material after the quenching step to form a sorbite structure,
   heating temperature and holding time in the quenching step are adjusted so that the steel material after the quenching step has a martensitic single phase structure, and
   in the tempering step, a heating temperature for tempering is adjusted based on a relationship between tempering temperature and hardness specific to the steel material so that Rockwell hardness of the material portion is 13 to 28 (HRC).
   According to such configuration, productivity is further improved, manufacturing costs can be reduced, and a mechanical structural member having high precision and excellent quality can be manufactured.
(10) The method for manufacturing a mechanical structural member according to any one of (6) to (9), where
   before the refining step,
   a quenching testing step is provided in which quenching is performed using a test material that has approximately the same shape and composition as the steel material, a structure of the test material after quenching is observed, and a quenching heating condition is selected so that the structure becomes a martensitic single phase structure, and
   the quenching step is performed using the quenching heating condition selected in the quenching testing step.
   According to such configuration, productivity is further improved, manufacturing costs can be reduced, and a mechanical structural member having high precision and excellent quality can be manufactured.
(11) The method for manufacturing a mechanical structural member according to (10), where
   between the quenching testing step and the tempering step,
   a tempering testing step is provided in which tempering is performed on a test material after the quenching testing step at a heating temperature selected based on the relationship between the tempering temperature and hardness specific to the steel material, and selecting a tempering heating condition such that the test material has a sorbite structure, Rockwell hardness of the material portion of the test material is 13 to 28 (HRC), and a variation in the Rockwell hardness of the material portion of the test material is within 6 (HRC), and
   the tempering step is performed using the tempering heating condition selected in the tempering testing step.
   According to such configuration, productivity is further improved, manufacturing costs can be reduced, and a mechanical structural member having high precision and excellent quality can be manufactured.
(12) The method for manufacturing a mechanical structural member according to (9), where
   before the quenching step,
   after quenching using a refining test material that has approximately the same shape and composition as the steel material,
   a refining testing step is provided in which the refining test material after the quenching is tempered at a heating temperature selected based on the relationship between the tempering temperature and hardness specific to the steel material,
   the refining testing step is a step of selecting a quenching heating condition and a tempering heating condition such that the refining test material after the tempering has a sorbite structure, Rockwell hardness of the material portion is 13 to 28 (HRC), and a variation in the Rockwell hardness in the material portion is within 6 (HRC),
   the quenching step is performed using the quenching heating condition selected in the refining testing step, and
   the tempering step is performed using the tempering heating condition selected in the refining testing step.

According to such configuration, the quenching heating conditions and the tempering heating conditions can be determined without conducting a test for determining only the quenching conditions.

Although various embodiments are described above, it is obvious that the present invention is not limited to such examples. It is clear that those skilled in the art can come up with various changes or modifications within the scope of the claims, and it is understood that the changes or modifications naturally fall within the technical scope of the present invention. Each of the constituent elements in the above-described embodiments may be freely combined without departing from the spirit of the invention.

The application is based on a Japanese patent application (Japanese Patent Application No. 2022-077203) filed on May 9, 2022, the contents of which are incorporated as a reference in the application.

### REFERENCE SIGNS LIST

1, 2: round bar material
11: tempered portion
12: softened layer
13, 14, 31a: hardened layer
21: test material
31: ball screw shaft
31b: core region
31c: boundary layer
32: groove
33: tooth

## Claims

1. A mechanical structural member, wherein:
in the mechanical structural member where a groove and a tooth are formed by plastic working,
a hardened layer having a martensite structure formed on a surface by induction hardening, a core region having a sorbite structure, and
a boundary layer in which a sorbite structure and a martensite structure are mixed, formed between the core region and the hardened layer are provided; and
Rockwell hardness in the core region is 13 to 28 (HRC), and a variation in the Rockwell hardness is within 6 (HRC).

2. The machine structural member according to claim 1, wherein
the groove and tooth are formed by infeed rolling.

3. The machine structural member according to claim 1, wherein
the machine structural member is one type selected from a screw shaft, a rack, a gear, and a serration.

4. The machine structural member according to claim 1, wherein:
the variation in the Rockwell hardness represents a difference between a maximum value and a minimum value when the Rockwell hardness is measured at a plurality of different arbitrary measurement points in the core region;
the difference between the maximum value and the minimum value is within 6 (HRC); and
the maximum value and the minimum value are both within a range of 13 to 28 (HRC).

5. The machine structural member according to claim 1, wherein:
when the machine structural member is a ball screw shaft with a thread groove formed by infeed rolling,
a variation in the Rockwell hardness represents a difference between a maximum value and a minimum value when comparing the Rockwell hardness in the same plane perpendicular to a longitudinal direction in the core region and at a measurement position of an entire core region,
a length of the ball screw shaft in the longitudinal direction is set as L,
three surfaces perpendicular to the longitudinal direction at positions separated by a predetermined distance from one end in the longitudinal direction are set as axial measurement surfaces,
one surface at a position selected within a range of 0.05L to 0.20L away from the one end in the longitudinal direction, one surface at a position selected within a range of 0.45L to 0.55L away from the one end in the longitudinal direction, and one surface at a position selected within a range of 0.80L to 0.95L away from the one end in the longitudinal direction are set as the axial measurement surfaces,
a distance from a radial center of the ball screw shaft to a shaft outer diameter is set as r,
the center of the ball screw shaft and four locations selected at approximately equal intervals on a circumference 0.5r apart from the center in a radial direction are set as radial measurement positions,
a comparison within the same plane is a comparison of Rockwell hardness at five radial measurement positions,
a comparison at the measurement positions of the entire core region is a comparison of the Rockwell hardness at the five radial measurement positions on the three axial measurement surfaces,
all of the differences between the maximum value and the minimum value of Rockwell hardness in the same plane are 2 (HRC) or less,
the difference between the maximum value and the minimum value of Rockwell hardness at the five radial measurement positions on the three axial measurement surfaces is 6 (HRC) or less, and
all of the maximum and minimum values of Rockwell hardness at the five radial measurement positions on the three axial measurement surfaces are within a range of 13 to 28 (HRC).

6. A method for manufacturing a mechanical structural member according to any one of claims 1 to 5, the manufacturing method comprising:
a refining step of refining a steel material to obtain a refined material that has a sorbite structure, has a Rockwell hardness of 13 to 28 (HRC) in a material portion excluding a predetermined thickness from a surface, and has a variation in Rockwell hardness within 6 (HRC) in the material portion;
a plastic working step of performing plastic working on a surface of the refined material where the groove and tooth are formed to obtain a processed material; and
an induction hardening step of performing induction hardening on the processed material.

7. The method for manufacturing a mechanical structural member according to claim 6, wherein
neither annealing nor annealing is performed between the refining step and the plastic working step.

8. The method for manufacturing a mechanical structural member according to claim 6, wherein
the plastic working is infeed rolling processing,

9. The method for manufacturing a mechanical structural member according to claim 6, wherein
the refining step includes:
a quenching step of heating and then cooling the steel material; and
a tempering step of heating and cooling the steel material after the quenching step to form a sorbite structure;
heating temperature and holding time in the quenching step are adjusted so that the steel material after the quenching step has a martensitic single phase structure; and
in the tempering step, a heating temperature for tempering is adjusted based on a relationship between tempering temperature and hardness specific to the steel material so that Rockwell hardness of the material portion is 13 to 28 (HRC).

10. The method for manufacturing a mechanical structural member according to claim 6, wherein:
before the refining step,
a quenching testing step is provided in which quenching is performed using a test material that has approximately the same shape and composition as the steel material, a structure of the test material after quenching is observed, and a quenching heating condition is selected so that the structure becomes a martensitic single phase structure; and
the quenching step is performed using the quenching heating condition selected in the quenching testing step.

11. The method for manufacturing a mechanical structural member according to claim 9, wherein:
between the quenching testing step and the tempering step,
a tempering testing step is provided in which tempering is performed on a test material after the quenching testing step at a heating temperature selected based on the relationship between the tempering temperature and hardness specific to the steel material, and selecting a tempering heating condition such that the test material has a sorbite structure, Rockwell hardness of the material portion of the test material is 13 to 28 (HRC), and a variation in the Rockwell hardness of the material portion of the test material is within 6 (HRC); and
the tempering step is performed using the tempering heating condition selected in the tempering testing step.

12. The method for manufacturing a mechanical structural member according to claim 8, wherein:
before the quenching step, and
after quenching using a refining test material that has approximately the same shape and composition as the steel material,
a refining testing step is provided in which the refining test material after quenching is tempered at a heating temperature selected based on the relationship between the tempering temperature and hardness specific to the steel material;
the refining testing step is a step of selecting a quenching heating condition and a tempering heating condition such that the refining test material after tempering has a sorbite structure, Rockwell hardness of the material portion is 13 to 28 (HRC), and a variation in the Rockwell hardness in the material portion is within 6 (HRC);
the quenching step is performed using the quenching heating condition selected in the refining testing step; and
the tempering step is performed using the tempering heating condition selected in the refining testing step.
